# EUROPEAN PATENT SPECIFICATION

(11) **EP 0 453 576 B1**
(45) Date of publication and mention of the grant of the patent: **17.04.1996**
(21) Application number: 90916799.1
(22) Date of filing: 15.11.1990
(51) Int. Cl.: G11B 11/10, G11B 7/12

(54) **OPTICAL PICKUP APPARATUS AND OPTICAL REPRODUCING APPARATUS**
OPTISCHE ABTASTEINHEIT UND OPTISCHES WIEDERGABEGERÄT
CAPTEUR OPTIQUE ET APPAREIL DE LECTURE OPTIQUE

(30) Priority: 16.11.1989 JP 298615/89
(43) Date of publication of application: 30.10.1991
(73) Proprietor: SONY CORPORATION, Tokyo 141 (JP)
(72) Inventor: FUKUMOTO, Atsushi, Shinagawa-ku Tokyo 141 (JP); OKA, Michio, Shinagawa-ku Tokyo 141 (JP)
(74) Representative: Thomas, Christopher Hugo
(86) International application number: PCT/JP90/01492
(87) International publication number: WO 91/07749

(56) References cited:
- EP-A- 0 229 035
- EP-A- 0 312 652
- JP-A-57 186 248
- JP-A-58 196 640
- JP-A-61 220 154

## Description

The present invention relates to an optical pickup apparatus used for reading out information signals recorded on an optical recording medium, such as a magneto-optical disc, and a magneto-optical reproducing system using the optical pickup apparatus.

Optical recording media which are designed to record information signals thereon by changing the magnetization direction of a perpendicularly magnetizable film in a recording layer and by optically reading out the recorded information signals as is done similarly to magneto-optical disc have heretofore been proposed.

Such an optical pickup apparatus for reading out information signals recorded on an optical recording medium converges a linearly polarized light beam through an objective lens to irradiate the signal recording surface of the optical recording medium with the converged light beam and to detect changes in direction of the linear polarization of returning light reflected by the optical recording medium by means of a photodetector. That is, the returning light from the optical recording medium has changed its polarization direction due to the Kerr effect depending upon the magnetization direction at an area which is irradiated with the light beam. The differences in the magnetization direction of the optical recording medium are detected by detecting changes in polarization direction of the returning light by detecting means such as photodetector disposed in the optical pickup apparatus for detecting the strength of light, for example, through a beam splitter having a polarization dependence. In the magneto-optical reproducing system using the optical pickup apparatus, reproducing of information signals recorded on the optical recording medium is performed based upon differences in the detected magnetization directions.

A magneto-optical disc is formed in such a manner that information signals are recorded by successively disposing recording pits on a recording track formed in a circumferential direction of the disc. The recording density of the information signals of such a kind of magneto-optical disc is determined by the recording line density, which is the recording density of recording pits successively arranged on the recording track, and the recording track density, which is the pitch between recording tracks adjacent in a radial direction of the disc. The recording line density and the recording track density, which determine the recording density of the information signals in the magneto-optical disc, are restricted by a cut-off frequency f_{c} of the optical pickup apparatus which reads the information signals from the magneto-optical disc. For example, if the spatial frequency of the changes in magnetization direction of the recording pits successively arranged on the recording track becomes higher than the cut-off frequency f_{c}, read out of the information signals from the returning light becomes impossible. If the spatial frequency corresponding to the pitch between the recording tracks adjacent in a radial direction of the disc becomes higher than the cut-off frequency f_{c}, so-called cross-talk, in which information signals are read out from the adjacent recording track, will occur.

The cut-off frequency of the optical pickup apparatus is determined by the numerical aperture NA of an objective lens forming the optical pickup apparatus and the wavelength λ of the light beam emitted from the optical pickup apparatus. The diameter, that is, the size of the beam spot of the light beam converged upon the signal recording surface of the magneto-optical disc is determined by the numerical aperture NA of the objective lens and the wavelength λ of the light beam. From these relations, the cut-off frequency f_{c} of the optical pickup apparatus will be increased as the diameter of the beam spot of the light beam converged upon the optical recording medium is decreased. The cut-off frequency f_{c} has a relation with the numerical number NA and the wavelength λ of the light beam represented by a first formula as follows:${\text{f}}_{\text{c}} \text{= 2NA/λ}$

In an optical pickup apparatus in which the numerical aperture NA of the objective lens is 0.5, and the wavelength λ of the light beam emitted from the optical source is 0.78µm in the formula 1, read out of information signals recorded at a spatial frequency of up to 1280 lines/mm is possible. Read out of information signals recorded at higher frequency is not possible. From the formula 1, it will suffice to increase the numerical number NA of the objective lens or to decrease the wavelength λ of the light beam in order to increase the cut-off frequency f_{c} of the optical pickup apparatus. The recording density of the magneto-optical disc which can be read by the optical pickup apparatus may be enhanced by increasing the cut-off frequency f_{c}.

However, if the numerical aperture of the objective lens is increased, for example, compensation for aberration cannot be sufficiently achieved and it becomes impossible to design and manufacture a lens having an excellent performance. Shortening the wavelength of the light beam emitted from a semiconductor laser element commonly used as a light source makes it impossible to design and manufacture the semiconductor laser element since light having a shorter wavelength has a higher light energy.

Therefore, the present invention is proposed in view of the above-mentioned circumstances.

It is an object of the present invention to provide an optical pickup apparatus which is capable of reading out information signals recorded at a high recording density having a spatial frequency higher than a cut-off frequency determined by the numerical aperture of an objective lens and the wavelength of a light beam without increasing the numerical aperture and decreasing the wavelength.

It is another object of the present invention to provide a magneto-optical reproducing system which enables an optical information disc on which information signals are recorded at a high recording density to be used as a recording medium.

EP-A-0 229 035 discloses an optical disc apparatus in which overlapping beams are used to allow beam spot size to be varied to effective sizes greater than that of an individual beam spot.

According to one aspect the present invention provides an optical pickup apparatus, comprising:
a light source for emitting a light beam;
light beam splitting means for splitting said light beam into two light beams which have different polarizations; and
means for irradiating a recording medium with said two light beams such that said two light beams are partially superimposed upon each other to form a superimposed area on said recording medium having a different polarization to said two light beams; characterised by:
photodetecting means for detecting light returning from one of said superimposed area or said two lights beams utilizing said different polarizations to discriminate therebetween.

A magneto-optical reproducing system of the present invention uses the above described optical pickup apparatus.

In the optical pickup apparatus of the present invention, two beams which are differently polarized are impinged upon an optical recording medium so that the beam spots on the medium are partially superimposed on each other. Accordingly, areas which are irradiated with three kinds of polarized light beams are formed on the optical recording medium. The area which is irradiated with a light beam having a polarization state among three kinds of polarized light beam corresponding to that used in the reading out of information signals may be smaller than any one of the beam spots.

Viewed from another aspect the invention provides an optical reproducing apparatus for reading information recorded on an optical recording medium by detecting a returning light from said optical recording medium, said optical reproducing apparatus comprising:
an optical pickup apparatus for irradiating said optical recording medium with two coherent light beams which are differently polarized and are partially superimposed upon each other to form a superimposed area on said optical recording medium having a different polarization to said two light beams; and
photodetecting means for detecting light returning from one of said superimposed area or said two lights between utilizing said different polarizations to discriminate therebetween.

Embodiments of the invention will now be described, by way of example only, with reference to the accompanying drawings in which:
Figure 1 is an elevational view schematically showing the structure of an optical pickup apparatus of the present invention;
Figure 2 is an enlarged plan view schematically showing the condition of beams spots formed on an optical recording medium by the optical pickup apparatus;
Figure 3 is an enlarged plan view schematically showing the condition of beam spots formed on an optical recording medium in another example use of an optical pickup apparatus of the present invention;
Figure 4 is an enlarged plan view schematically showing the conditions of beam spots formed on an optical recording medium in other examples of an optical pickup apparatus of the present invention;
Figure 5 is an enlarged front view schematically showing the structure of a photodetector constituting an optical pickup apparatus for forming the beam spots shown in Figure 4; and
Figure 6 is an enlarged front view schematically showing another example of the structure of a photodetector constituting an optical pickup apparatus for forming the beam spots shown in Figure 4.

Now, embodiments of the present invention will be described in detail with reference to the drawings.

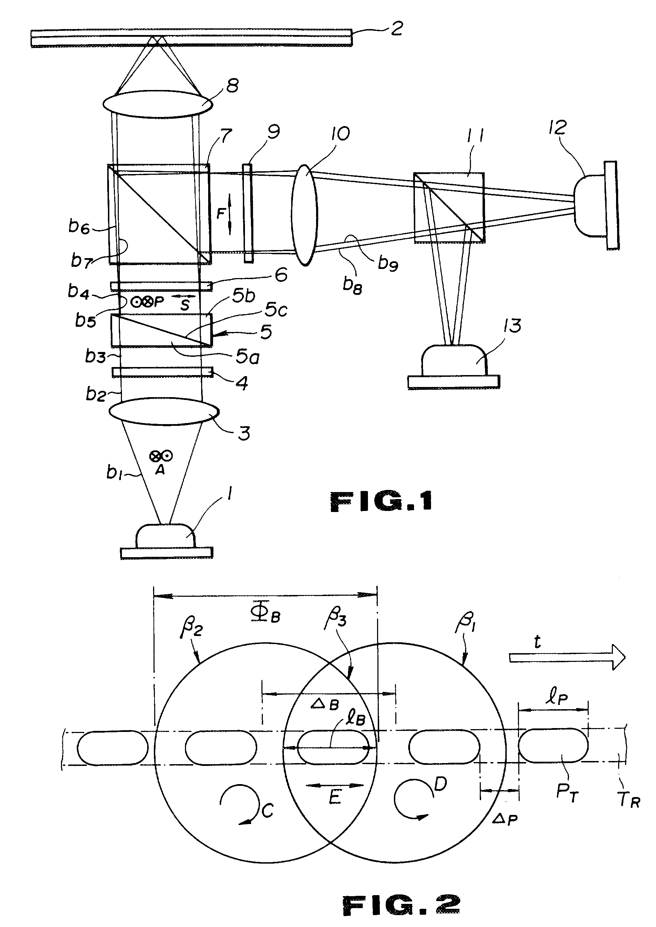

An optical pickup apparatus of the present invention has a semiconductor laser element 1 which serves as an optical source as shown in Figure 1. The apparatus is designed so that an optical beam emitted from the semiconductor laser element 1 is impinged upon a magneto-optical disc 2 as an optical recording medium via a predetermined optical device.

The light beam b₁ emitted from the semiconductor laser element 1 is a light beam having a coherent phase and is polarized in one direction shown by an arrow A in Figure 1 perpendicular to the travelling direction. In Figure 1, the arrow A is represented in a direction perpendicular to the plane of the drawings.

The light beam b₁ is converted into a parallel light beam b₂ through a collimator lens 3 and is impinged upon a first rotatory polarizer 4. The first rotatory polarizer 4 is formed of, for example, a half wavelength plate. The parallel light beam b₂ is converted into a light beam b₃ having a polarized direction rotated by 45° by having been transmitted through the first rotatory polarizer 4.

The light beam b₃ is impinged upon a Wollaston prism 5 which serves as a light splitting element. The Wollaston prism 5 is adapted to split the incident light beam b₃ into two light beams b₄ and b₅ having the same intensity of light, which have travelling directions which form a given angle θ. The two light beams b₄ and b₅ which are split by the Wollaston prism 5 are linearly polarized in directions which intersect with each other at a normal angle as shown by arrows P and S in Figure 1.

The Wollaston prism 5 comprises two prisms 5a and 5b made of a material having a given crystalline structure which exhibits birefringence. The two prisms 5a and 5b are disposed in such a manner that the cyrstalline axes intersect with each other at a normal angle and the prisms are bonded to each other at a bonding interface 5c having a given inclination angle relative to the travelling direction of the incident light beam. The way in which the refractive index changes for the light beam b₃ incident on the Wollaston prism 5 and having a polarized component P before and after passing through the bonding interface 5c is the reverse to that for the light beam having a polarized component S. The directions of refraction of the polarized component P and S at the bonding interface 5c are opposite so that the incident light beam is split at the bonding interface 5c. The intensity of the light beams b₄ and b₅ split by the Wollaston prism 5 can be adjusted so that they become equal to rotating the first rotatory polarizer 4 around its optical axis.

The arrow P represents the same direction as that represented by the arrow A in Figure 1.

The two light beams b₄ and b₅ split by the Wollaston prism 5 are incident upon a quater-wavelength plate 6 serving as a phase converting element. The quater-wavelength plate 6 is disposed in such manner that the incident light beams b₄ and b₅ converted into light beams b₆ and b₇, respectively, which are circularly polarized in opposite rotational directions by converting the phase of the vibrational components along two axes normally intersecting with each other on a plane which intersects the travelling direction of the incident light beams b₄ and b₅ at a normal angle. In other words, the quater-wavelength plate 6 is disposed so that the direction of the crystal axis and the polarization direction of each light beam b₄ and b₅ make an angle of 45°.

The two light beams b₆ and b₇, which have been transmitted through the quater-wavelength plate 6 and are circularly polarized in opposite rotation directions, will be transmitted through the beamsplitter 7 and be converged upon disc 2 by an objective lens 8. That is, two beam spots β₁ and β₂ each having a given diameter Φ_{B} and spaced as represented by an arrow Δ_{B} in Figure 2, which are circularly polarized in opposite rotational directions shown by arrows C and D in Figure 2, are formed on the disc 2 as shown in Figure 2.

Since the spacing Δ_{B} between the centers of the beam spots β₁ and β₂, which is shown by the arrow Δ_{B}, is represented by a formula Δ_{B} = f.θ wherein f represents the focal length of the objective lens 8, and θ represents an angle between the travelling directions of the two light beams b₄ and b₅ split by the Wollaston prism 5, the spacing Δ_{B} can be preset as desired by changing the focal length f and the angle θ. Since, the spacing Δ_{B} is made shorter than the diameter of Φ_{B} of the beam spots β₁ and β₂, the two beam spots β₁ and β₂ are partially superimposed upon each other on the disc 2. The light beams b₆ and b₇ which are incident upon a superimposed area β₃, in which the beam spots β₁ and β₂ are superimposed on with each other, interfere with each other since the light beams b₆ and b₇ are coherent. Consequently, the light on the superimposed area β₃ is linearly polarized in a direction connecting the centers of the beam spots β₁ and β₂. The length ℓ_{B} of the superimposed area β₃ in a direction between the centers of the beam spots β₁ and β₂, represented by an arrow ℓ_{B}, can be represented by a formula:
ℓ_{B} = Φ_{B} - Δ_{B}. Thus, the length ℓ_{B} is made shorter than the diameter Φ_{B} of the beam spots β₁ and β₂ and can be preset as desired by changing the spacing Δ_{B}.

A recording track T_{R} is formed on the disc 2. The recording track T_{R} is formed from the inner peripheral side of the disc 2 to the outer peripheral side in a spiral manner so that successive circular lines are formed at a given pitch in a radial direction. A multiplicity of recording pits P_{T} for recording information signals by the differences in the directions of the perpendicular magnetization are formed on and along the recording track T_{R} in a track direction represented by an arrow t.

When the linearly polarized light beam is incident upon each of the recording pits P_{T}, the polarization direction of the light beam is changed by the Kerr effect depending upon the direction of perpendicular magnetization of the irradiated recording pit P_{T} and the light beam is reflected thereby. When the circularly polarized light beam is incident upon the recording pit P_{T} and the light beam is reflected thereby still circularly polarized without being influenced by the Kerr effect. The light beam reflected from the superposed area β₃ of the returning light b₈ and b₉, which are light beams b₆ and b₇ reflected by the disc 2, are linearly polarized by the Kerr effect whilst returning light from the beam spots β₁ and β₂ other than from the superimposed area β₃ is circularly polarized unchanged after they are reflected.

The optical pickup apparatus is positioned relative to the disc 2 so that the direction running between the beam spots β₁ and β₂ is the direction of the recording track T_{R}. The recording pits P_{T}, each having a given pit length ℓₚ, represented by an arrow ℓₚ in Figure 2 are at a given spacing Δ_{P} along the track represented by an arrow Δ_{P} in Figure 2.

The pit length ℓₚ is not always a constant for some recording formats of information signals to be recorded and may be changed depending upon the content of the information signals. The minimum value min ℓₚ of the pit length ℓₚ is determined so that the spatial frequency in the direction of the recording track T_{R} will not exceed a cut-off frequency corresponding to the length ℓ_{B} of the superimposed portion β₃ in a direction between the beam spots β₁ and β₂. In a similar way to the pit length ℓₚ, the pit spacing Δ_{P} is not necessarily a constant for all recording formats information signals and may change depending upon the content of the information signals. The minimum value min Δ_{P} of the pit spacing Δ_{P} is determined so that the spatial frequency in the direction of the recording track T_{R} will not exceed a cut-off frequency corresponding to the length ℓ_{B}.

The returning light beams b₈ and b₉ from the disc 2 are made parallel by the objective lens 8 and are returned to the beam splitter 7. The returning light beams b₈ and b₉ are reflected by the beam splitter 7 and are incident upon a second rotatory polarizer 9. A half wavelength plate is used as the second rotatory polarizer 9.

Since the portion of the returning light beams b₈ and b₉, reflected by the superimposed area β₃, is linearly polarized in a direction represented by an arrow F in Figure 1, the direction of the polarization of this returning portion is rotated by 45° around the optical axis in the second rotatory polarizer 9. Since the returning portions of the light beams b₈ and b₉ reflected from the area outside the superimposed area β₃ are circularly polarized, their polarization is not changed in the rotatory polarizer 9.

The returning light beams which have been transmitted through the second rotatory polarizer 9 are converged by a detection lens 10 and are incident upon a polarized light beam splitter 11. Since the returning lights of the returning beams b₈ and b₉ reflected from the superimposed area β₃ have a linear polarization direction which has been rotated by 45° around the optical axis by the second rotatory polarizer 9 in the polarized light beam splitter 11, substantially 50% of the light beams are transmitted through the splitter 11 and are converged upon a photodetector 12 and the remaining substantially 50% of light beams are reflected by the splitter 11 and are condensed upon a section photodetector 13. The transmission and reflection factors of the returning light of the returning light beams b₈ and b₉ in the beam splitter 11 reflected by the superimposed area β₃ are changed depending upon the changes in the direction of the linear polarization due to the Kerr effect. Since the returning light of the returning light beams b₈ and b₉ reflected from the area other than the superimposed are β₃ are circularly polarized, substantially 50% of the light is constantly transmitted through the polarization beam splitter 11 and is converged upon the second photodetector 13.

The first and second photodetectors 12 and 13 each comprises, for example, a photo-transistor or photo-diode. The outputs of the photodetectors 12 and 13 are subtracted from each other to provide a read-out signal of an information signal recorded on the disc 2 using a so-called differential detection system. That is, only outputs corresponding to components of change in the transmission and reflection factors in the polarization beam splitter 11 due to the Kerr effect are taken out and the unchanged components are cancelled with each other to provide a zero signal.

As mentioned above, information signals having a spatial frequency higher than a cut-off frequency corresponding to the diameter Φ_{B} of each of the beam spots β₁ and β₂ which are recorded on the disc 2 can be read out in the optical pick up apparatus in accordance with the present invention.

The optical pickup apparatus is applied to a magneto-optical reproducing system and functions as an information detecting head of this reproducing system.

The light splitting element is not limited to only the above-mentioned Wollaston prism 5 and a device comprising a diffraction grating and rotatory polarized may be used. The optical pickup apparatus can be formed without using the rotatory polarizer 4 if the semiconductor 1 is rotated by 45° around the optical axis relative to the track direction of the recording track T_{R}. The optical pickup apparatus can be formed without using the second rotatory polarizer 9 if the polarized beam splitter 11 and the photodetectors 12 and 13 are rotated by 45° around the optical axis.

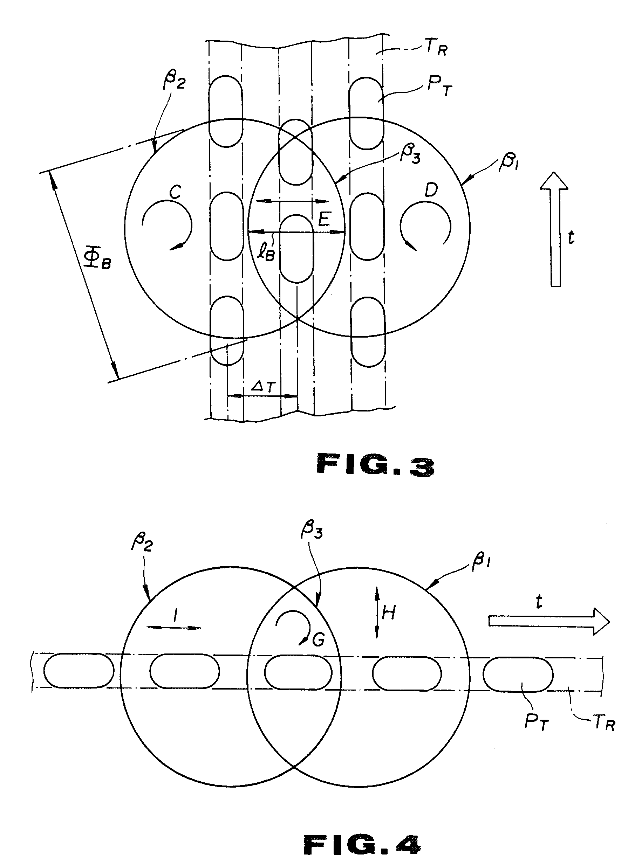

The optical pickup apparatus of the present invention which is formed as shown in Figure 2 can be used by providing the beam spots β₁ and β₂ formed on the disc 2 in such a manner that a line between the centers of the beam spots β₁ and β₂ intersects the track direction of the recording track T_{R} as shown in Figure 3. In the thus arranged optical pickup apparatus, the track pitch ΔT between recording track T_{R}, represented by an arrow ΔT in Figure 3, may be made to have a spacing corresponding to a spatial frequency higher than a cut-off frequency corresponding to the diameter Φ_{B}, of the beam spots β₁ and β₂, so that the recorded information signals are read out without causing so-called cross talks.

If the two beam spots β₁ and β₂ are arranged in the track direction of the recording track T_{R} as shown in Figures 1 and 2 and the quater-wavelength plate 6 is rotated by substantially 45° around an optical axis in the optical pickup apparatus of the present invention, light beams impinged upon the superposed area β₃ as shown in Figure 4 are circularly polarized in a direction as shown by an arrow G in Figure 4. That is, in this case, the light beams which have passed through the Wollaston prism 5 are brought into an out-of-phase by 90° with each other without changing the polarization direction by the quater-wavelength plate 6. Therefore, the beam spots β₁ and β₂ are formed of linearly polarized light beams in directions represented by arrows I and H which intersect with each other and a circulary polarized light beam which is formed by interference between these light beams is incident upon the superimposed are β₃.

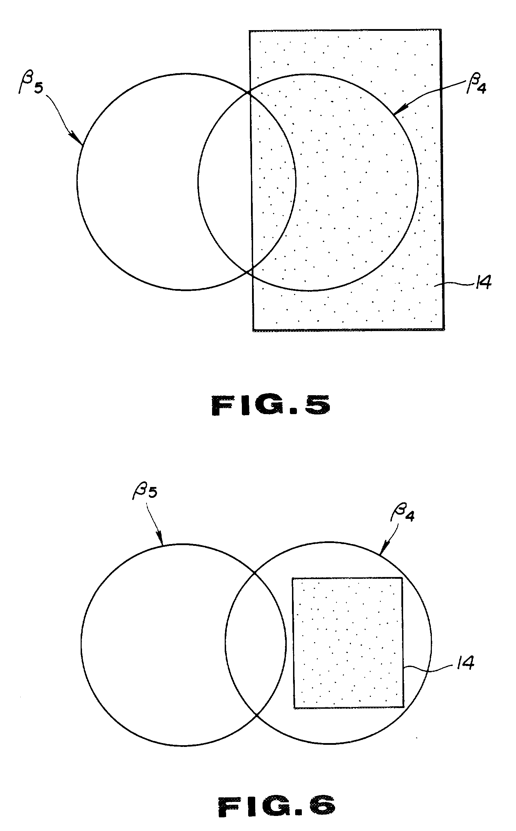

When the outputs of the first and second photodetectors 12 and 13 are differentially detected in the thus formed optical pickup apparatus, the component of a change due to the Kerr effect of the light beams reflected from a pair of areas other than the superimposed area β₃ of the beam spots β₁ and β₂ is detected. Each of the photodetectors in this case is formed so that it has a photo receiving face l4 for detecting the strength of light of only one of the light beams β₄ and β₅ reflected by a pair of areas other than the superimposed area β₃ of the beam spots β₁ and β₂ as shown in Figure 5. The receiving face l4 may have an area smaller than the sectional area of either one of the light beams β₄ and β₅, the light strength of which is to be detected. If each of the photodetectors 12 and 13 has the photoreceiving face 14 having an area not less than about 40% of the sectional area of the light beam, the light strength of which is to be detected, it can sufficiently detect the strength of the light beam.

As in the optical pickup apparatus, information signals having a spatial frequency higher than a cut-off frequency corresponding to the diameter Φ_{B} of the beam spots β₁ and β₂ which are recorded on the disc 2 can be read out in a similar way to optical pickup apparatus in which two beam spots β₁ and β₂ are arranged in a track direction of the recording track T_{R} as shown in Figures 1 and 2.

A magneto-optical reproducing system using the optical pickup apparatus formed as mentioned-above enables a magneto-optical disc on which information signals are recorded at a spatial frequency higher than a cut-off frequency of the optical pickup apparatus to be used as a recording medium.

In the optical pickup apparatus of the present invention, two beams which are differently polarized are incident upon an optical recording medium so that the beam spots on the medium are partially superimposed on each other.

Accordingly, areas which are irradiated with three kinds of polarized light beams are formed on the optical recording medium. The area which is irradiated with a light beam having a polarization state involved in reading out of information signals from among the three kinds of polarized light beams is smaller than each of the beam spots.

In the optical pickup apparatus, the spatial frequency of the readable information signals is equivalent to that of the case in which reading out of the information signals is achieved with a beam spot having a size equal to that of an area irradiated with a light beam having a polarization state involved in reading out of the information signals.

In other words, the present optical pickup apparatus enables reading out of information signals having a spatial frequency higher than a cut-off frequency determined by the numerical aperture of an objective lens and the wavelength of a light beam, which are recorded at a high recording density without increasing the numerical aperture and decreasing the wavelength.

The optical pickup apparatus is applied to a magneto-optical reproducing system and functions as an information detecting head for this reproducing system.

## Claims

1. An optical pickup apparatus, comprising:
a light source (1) for emitting a light beam (b₁);
light beam splitting means (5) for splitting said light beam into two coherent light beams (b₆, b₇) which have different polarizations; and
means (8) for irradiating a recording medium (2) with said two light beams such that said two light beams are partially superimposed upon each other to form a superimposed area (β₃) on said recording medium having a different polarization to said two light beams;
characterised by:
photodetecting means (9, 10, 11, 12, 13) for detecting light returning from one of said superimposed area or said two lights beams utilizing said different polarizations to discriminate therebetween.

2. An optical pickup apparatus as claimed in claim 1, comprising:
a phase converting element (6) through which said two light beams split by said light splitting means are passed to convert the phase of the vibrational components of said two light beams along two axes normally intersecting the travelling direction.

3. An optical pickup apparatus as claimed in claim 1, wherein said superimposed area is smaller in area (β₁, β₂) projected on the said recording medium than by either of said two light beams.

4. An optical pickup apparatus as claimed in claim 1, wherein said two light beams (b₆,b₇) split by said light splitting means (5) are each linearly polarized in a direction rotated in different senses by 45° around an optical axis.

5. An optical pickup apparatus as claimed in claims 2 and 4, wherein said two light beams (b6,b7) split by said light splitting means (5) are converted into light beams which are circularly polarized in opposite senses by being transmitted through said phase converting means (6).

6. An optical pickup apparatus as claimed in claims 2 and 4, wherein said two light beams (b₆,b₇) split by said optical splitting means (5) are converted into light beams which are linearly polarized in directions which normally intersect with each other by being transmitted through said phase converting means (6).

7. An optical reproducing apparatus for reading information recorded on an optical recording medium by detecting a returning light from said optical recording medium, said optical reproducing apparatus comprising:
an optical pickup apparatus for irradiating said optical recording medium with two coherent light beams which are differently polarized and are partially superimposed upon each other to form a superimposed area on said optical recording medium having a different polarization to said two light beams; and
photodetecting means (9, 10, 11, 12, 13) for detecting light returning from one of said superimposed area or said two lights between utilizing said different polarizations to discriminate therebetween.

8. An optical reproducing apparatus as claimed in claim 7, wherein said optical pickup apparatus comprises an optical pickup apparatus as claimed in any one of claims 1 to 6.

## Patentansprüche

1. Optisches Abtastgerät, mit:
einer Lichtquelle (1) zur Emittierung eines Lichtstrahls (b₁);
einer Lichtstrahlaufspalteinrichtung (5) zum Aufspalten des Lichtstrahls in zwei kohärente Lichtstrahlen (b₆, b₇), welche unterschiedliche Polarisationen haben; und
einer Einrichtung (8) zum Bestrahlen eines Aufzeichnungsmediums (2) mit diesen beiden Lichtstrahlen derart, daß sich die beiden Lichtstrahlen teilweise einander überlagern, um einen Überlagerungsbereich (β₃) auf dem Aufzeichnungsmedium zu bilden, der eine gegenüber den beiden Lichtstrahlen unterschiedliche Polarisation besitzt;
gekennzeichnet durch:
eine Fotoermittlungseinrichtung (9, 10, 1, 12, 13) zur Ermittlung des Lichts, das entweder vom Überlagerungsbereich oder von den beiden Lichtstrahlen zurückkehrt, wobei zwei unterschiedliche Polarisationen verwendet werden, um dazwischen zu unterscheiden.

2. Optisches Abtastgerät nach Anspruch 1, mit:
einen Phasenumsetzungselement (6), durch das die beiden Lichtstrahlen, die durch die Lichtaufspalteinrichtung gespalten wurden, laufen, um die Phase der Schwingungskomponenten der beiden Lichtstrahlen längs zweier Achsen umzusetzen, die die Laufrichtung senkrecht schneiden.

3. Optisches Abtastgerät nach Anspruch 1, wobei der Überlagerungsbereich, der auf das Aufzeichnungsmedium projiziert wird, bereichsmäßig (β₁, β₂) kleiner ist als der durch jeden der beiden Lichtstrahlen projizierte Bereich.

4. Optisches Abtastgerät nach Anspruch 1, wobei die beiden Lichtstrahlen (b₆, b₇), die durch die Lichtaufspaiteinrichtung (5) aufgespalten wurden, jeweils in einer Richtung linear polarisiert sind, die in unterschiedlichem Sinn um 45° um eine optische Achse gedreht ist.

5. Optisches Abtastgerät nach Anspruch 2 und 4, wobei die beiden Lichtstrahlen (b₆, b₇), die durch die Lichtaufspalteinrichtung (5) aufgespalten wurden, in Lichtstrahlen umgesetzt werden, die in entgegengesetztem Sinn zirkular polarisiert sind, wobei sie durch die Phasenumsetzungseinrichtung (6) übertragen werden.

6. Optisches Abtastgerät nach Anspruch 2 und 4, wobei die beiden Lichtstrahlen (b₆, b₇), die durch die optische Lichtaufspalteinrichtung (5) aufgespaltenwurden, in Lichtstrahlen umgesetzt werden, die in Richtungen lineare polarisiert sind, die einander sich senkrecht schneiden, wobei sie durch die Phasenumsetzungseinrichtung (6) übertragen werden.

7. Optisches Wiedergabegerät zum Lesen einer Information, die auf einem optischen Aufzeichnungsmedium aufgezeichnet ist, durch Ermitteln eines rückkehrenden Lichtes vom optischen Aufzeichnungsmedium, wobei das optische Wiedergabegerät aufweist:
ein optisches Abtastgecät zur Bestrahlung des optischen Aufzeichnungsmediums mit zwei kohärenten Lichtstrahlen, welche unterschiedlich polarisiert sind und die teilweise einander überlagern, um einen Überlagerungsbereich auf dem optischen Aufzeichnungsmedium zu bilden, das eine unterschiedliche Polarisation gegenüber den beiden Lichtstrahlen besitzt; und
eine Fotoermittlungseinrichtung (9, 10, 11, 12, 13), um das Licht zu ermitteln, das vom Überlagerungsbereich oder den beiden Lichtstrahlen zurückkehrt, wobei verschiedene Polarisationen verwendet werden, um dazwischen zu unterscheiden.

8. Optisches Wiedergabegerät nach Anspruch 7, wobei das optische Wiedergabegerät ein optisches Abtastgerät umfaßt, wie es in einem der Ansprüche 1 bis 6 beansprucht wurde.

## Revendications

1. Capteur optique, comportant :
une source lumineuse (1) émettant un faisceau lumineux (b₁);
des moyens de division de faisceau lumineux (5) pour séparer ledit faisceau lumineux en deux faisceaux lumineux cohérents (b₆, b₇) qui possèdent des polarisations différentes; et
des moyens (8) pour irradier un support d'enregistrement (2) avec lesdits deux faisceaux lumineux de sorte que lesdits deux faisceaux lumineux soient partiellement superposés l'un sur l'autre pour former une zone superposée ( β ₃) sur ledit support d'enregistrement possédant une polarisation différente par rapport auxdits deux faisceaux lumineux;
caractérisé par
des moyens de photodétection (9, 10, 11, 12, 13) pour détecter la lumière réfléchie de l'une de ladite zone superposée ou desdits deux faisceaux lumineux utilisant lesdites polarisations différentes pour les distinguer.

2. Capteur optique selon la revendication 1 , comportant :
un élément déphaseur (6) traversé par lesdits deux faisceaux lumineux divisés par lesdits moyens de division de lumière pour convertir les composantes vibratoires desdits deux faisceaux lumineux le long de deux axes entrecoupant normalement la direction de déplacement.

3. Capteur optique selon la revendication 1, dans lequel ladite zone superposée est de surface inférieure ( β ₁ , β ₂) projetée sur ledit moyen d'enregistrement par l'un ou l'autre desdits deux faisceaux.

4. Capteur optique selon la revendication 1, dans lequel lesdits deux faisceaux lumineux (b₆, b₇) divisés par lesdits moyens de division de lumière (5) sont chacun polarisés linéairement dans une direction tournée dans différents sens de 45° autour d'un axe optique.

5. Capteur optique selon les revendications 2 et 4, dans lequel lesdits deux faisceaux lumineux (b₆, b₇) divisés par lesdits moyens de division de lumière (5) sont convertis en faisceaux lumineux polarisés circulairement dans des sens opposés en étant transmis par l'intermédiaire des moyens de conversion de phase (6).

6. Capteur optique selon les revendications 2 et 4, dans lequel lesdits deux faisceaux lumineux (b₆, b₇) divisés par lesdits moyens de division optique (5) sont convertis en faisceaux lumineux polarisés circulairement dans des directions qui s'entrecoupent normalement mutuellement en étant transmis par l'intermédiaire des moyens de conversion de phase (6).

7. Dispositif de reproduction optique pour la lecture d'informations enregistrées sur un support d'enregistrement optique en détectant une lumière réfléchie par ledit support d'enregistrement optique, ledit dispositif d'enregistrement optique comportant :
un capteur optique pour irradier ledit support d'enregistrement avec deux faisceaux optiques cohérents qui sont polarisés différemment et sont partiellement superposés l'un à l'autre pour former une zone superposée sur ledit support d'enregistrement optique possédant une polarisation différente par rapport auxdits deux faisceaux lumineux; et
des moyens de photodétection (9, 10, 11, 12, 13) pour détecter une lumière réfléchie de l'une de ladite zone superposée ou lesdites deux lumières en utilisant lesdites polarisations différentes pour les distinguer.

8. Dispositif de reproduction optique selon la revendication 7, dans lequel ledit capteur optique comprend un capteur optique selon l'une quelconque des revendications 1 à 6.
